# EUROPEAN PATENT SPECIFICATION

(11) **EP 0 786 193 B1**
(45) Date of publication and mention of the grant of the patent: **06.06.2001**
(21) Application number: 96923025.9
(22) Date of filing: 31.07.1996
(51) Int. Cl.: H05B 41/36, H05B 37/02

(54) **BALLAST CIRCUIT**
VORSCHALGERÄT
CIRCUIT DE BALLAST

(30) Priority: 09.08.1995 US 512868
(43) Date of publication of application: 30.07.1997
(73) Proprietor: Koninklijke Philips Electronics N.V., 5621 BA Eindhoven (NL)
(72) Inventor: XIA, Yongping, Torrance, CA 90501 (US); ZHU, Joshua, Torrance, CA 90501 (US); VENKITASUBRAHMANIAN, Sreeraman, 5656 AA Eindhoven (NL); JAYARAMAN, Raj, Rancho Palos Verdes, CA 90274 (US); FARKAS, Thomas, South Euclid, OH 44121 (US)
(74) Representative: Bosma, Rudolphus Hubertus Antonius
(86) International application number: PCT/IB96/00763
(87) International publication number: WO 97/06655

(56) References cited:
- EP-A- 0 471 215
- US-A- 4 329 678
- US-A- 5 227 762

## Description

The invention relates to a ballast circuit for operating an electric lamp, comprising:
- power inputs for receiving an AC power signal,
- means for generating a lamp current out of said AC power signal,
- means for controlling the operation of the electric lamp in response to a control command, and
- a receiver for receiving an input signal carrying said control command, said input signal having a fundamental period with a nominal voltage waveform.

Such a ballast circuit is known from U.S. 5,068,576. Another ballast circuit that fits the description of the first paragraph is disclosed in U.S. application serial no. 08/414,859 and still another such ballast circuit is disclosed in U.S. application serial no. 08/512,856. In all three mentioned ballast circuits, the AC power signal and the input signal carrying the control command are identical and the ballast circuit is part of a lamp operating system comprising encoding means. The nominal voltage waveform is sinusoidal in all three cases. In case of the system disclosed in U.S. 5,068,576 said encoding means completely cuts or reduces the magnitude of an entire half period, so that there is a missing pulse or a pulse of significantly reduced voltage in the rectified DC output of the of a rectifier comprised in the ballast circuit. The time period between successive missing pulses represents a dimming command. For example, time "n" between missing pulses may represent a 70% dim level while time "m" between missing pulses represents a 90% dim level. In the system disclosed in U.S. application serial no. 08/414,859 the encoding means encode the control command by applying a phase cut to each half period of the sinusoidal power signal. The light output of the lamp varies inversely to the phase angle of the phase cut. In the system disclosed in U.S. application serial no. 08/512,856, commands are indicated by an occurrence signature of a pre-selected perturbation in the nominal voltage waveform occurring within a control period of a pre-selected number of fundamental periods. Preferably the nominal voltage waveform is sinusoidal, said fundamental period is a half-cycle of the full-wave rectified sinusoidal signal and the perturbation consists of a phase cut of part of the fundamental periods comprised in a control period.

A disadvantage of commercially available ballast circuits is that the receiver in the ballast is dedicated to a particular type of wall controller. For example, ballasts which use phase angle dimming can only be used with phase angle wall controllers and not with wall controllers that supply a control signal via the step dimming method of, for example, U.S. 5,068,576. Even within the phase angle control technique, ballasts which employ forward phase angle dimming may be limited to use with triac-type wall controllers, and not with electronic (reverse phase angle) wall controllers. This dedication of the ballast to certain wall controllers, and vice versa, limits the flexibility for the consumer as well as the ballast manufacturer.

The invention aims to provide a ballast circuit controller with a receiver and a decoding means for use in a ballast circuit, which overcome the above mentioned disadvantages of the prior art.

A ballast circuit as described in the opening paragraph is therefore according to the invention characterized in that said receiver includes decoding means for decoding control commands present in the input signal according to at least two of:
(i) a first control technique wherein commands are indicated by the phase angle of a phase angle cut in the nominal waveform;
(ii) a second control technique wherein commands are indicated by the number of fundamental periods between start and stop points of the command, the stop and start points being fundamental periods having a nominal voltage less than the nominal waveform; and
(iii) a third control technique wherein commands are indicated by an occurrence signature of a pre-selected perturbation in the nominal waveform occurring within a control period of a pre-selected number of fundamental periods.
Since the decoding means comprise means for decoding control commands according to at least two of the control techniques the ballast circuit is compatible with at least two different encoders or wall controllers.

Preferably said decoding means includes means for decoding control commands from each of said three control techniques.

In a preferred embodiment of a ballast circuit according to the invention said decoding means includes at least two of
- first means for decoding control commands according to said first control technique,
- second means for decoding control commands according to said second control technique,
- third means for decoding control commands according to said third control technique,
and further includes identifying means for identifying the control technique of commands encoded according to said at least two of said first, second and third techniques and for activating the respective one of said at least two means corresponding to the control technique identified by said identifying means. In this way the compatibility of the ballast circuit is realized in a relatively simple and dependable way.

Preferably said identifying means include means for generating a first detection signal comprising means for differentiating the input signal. Since in the first control technique and in preferred embodiments of the third control technique use is made of phase cuts in at least part of the fundamental periods, the differentiation of the input signal produces first detection signals consisting of voltage pulses in case of both control techniques. These pulses are not produced when the second control technique is in use. In case the first control technique is used, every fundamental period of the input signal has a phase cut, whereas in case of the third control technique only part of the fundamental periods of the input signal has a phase cut. The identifying means preferably first tests for the presence of control commands according to said first control technique by counting the number of first detection signals generated in a first pre-determined time period. In the absence of control commands according to said first control technique, said identifying means then tests for the presence of control commands according to said second technique, if the control commands according to said second technique are identified, said identifying means activates said second means of said decoding means and if control commands according to said second technique are not identified, said identifying means activates said third means of said decoding means. In order to enable such a functioning of the identifying means, said identifying means preferably includes means for generating a second detection signal in response to the presence of a said start and stop point according to said second control technique. This can easily be done in case the identifying means tests for the presence of commands according to said second control technique by counting the number of said second detection signals generated in a second pre-determined time period.

In another preferred embodiment of a ballast circuit according to the invention said receiver is coupled to said power inputs for receiving control commands carried by said AC power signal. Because the control commands are carried by the AC power signal the ballast circuit need no separate input for receiving the input signal, so that the ballast circuit is relatively easy to install.

Good results have been obtained with ballast circuits according to the invention, wherein said nominal waveform is sinusoidal and said fundamental period is a half-cycle of the full-wave rectified sinusoidal signal.
These and other objects, features and advantages of the invention will become apparent from the following drawings, detailed description and appended claims.

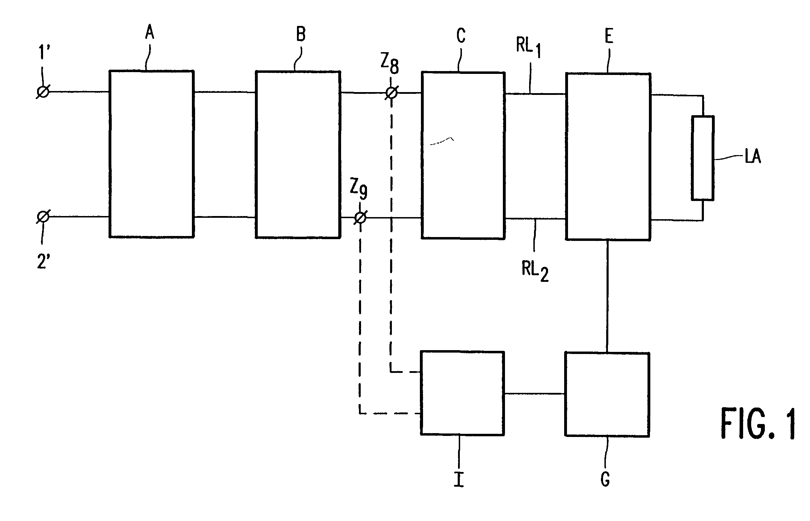

In the drawing Fig. 1 is a block diagram of an embodiment of a ballast circuit for operating an electric lamp according to the present invention;
Fig. 2 shows decoding means comprised in the receiver of the embodiment shown in Fig. 1;
Fig. 3 shows the shapes of signals that can be present in the receiver of the embodiment shown in Fig. 1 during operation, and
Fig. 4 shows a flow chart for controlling the operation of the decoding means shown in Fig. 2.

The fluorescent lamp ballast circuit, shown in Figure 1 includes an EMI and triac damping filter "A" connected to full bridge input rectifier "B", which together convert an AC power line voltage into a rectified, filtered DC voltage at an output thereof. The pre-conditioner circuit "C" includes circuitry for active power factor correction, as well as for increasing and controlling the DC voltage from the rectifier circuit B, which DC voltage is provided across a pair of DC rails RL1, RL2. The ballast circuit includes a DC-AC converter, or inverter, "E" and a controller "G" which controls the inverter. The inverter E is a half-bridge configuration which under control of the half-bridge controller, or driver, circuit G provides a high frequency lamp current to the lamp La coupled to the inverter E. In the embodiment shown in Fig. 1 the means for generating a lamp current are formed by filter "A", rectifier "B" , preconditioner circuit "C" and inverter "E". Controller G forms means for controlling the operation of the electric lamp in response to a control command.

A dimming interface circuit "I" is connected between an output of the rectifier circuit B and a control input of ballast circuit present at the controller G to control the operation, more in particular in this embodiment the light output of the lamp. The dimming interface circuit "I" is coupled to the power inputs via filter "A" and full bridge input rectifier "B". In the embodiment shown in Fig. 1 the input signal and the AC power signal are identical. The dimming interface circuitry provides a dimming voltage signal to the controller G and forms the receiver for receiving an input signal carrying the control command. The receiver comprises decoding means for decoding control commands present in the input signal according to:
(i) a first control technique wherein commands are indicated by the phase angle of a phase angle cut in the nominal waveform;
(ii) a second control technique wherein commands are indicated by the number of fundamental periods between start and stop points of the command, the stop and start points being fundamental periods having a nominal voltage less than the nominal waveform; and
(iii) a third control technique wherein commands are indicated by an occurrence signature of a pre-selected perturbation in the nominal waveform occurring within a control period of a pre-selected number of fundamental periods.

Since the decoding means comprises means for decoding at least two different input signals corresponding to different control techniques, the ballast circuit is compatible with at least two different encoders or wall controllers.

The AC power signal that is used with the ballast circuit shown in Fig. 1 is a 60 Hz sinusoidal supply voltage. A detailed description of the operation of all the parts of the ballast circuit shown in Fig. 1 except the receiver is given in U.S. application serial no. 08/414,859 and will not be repeated here.

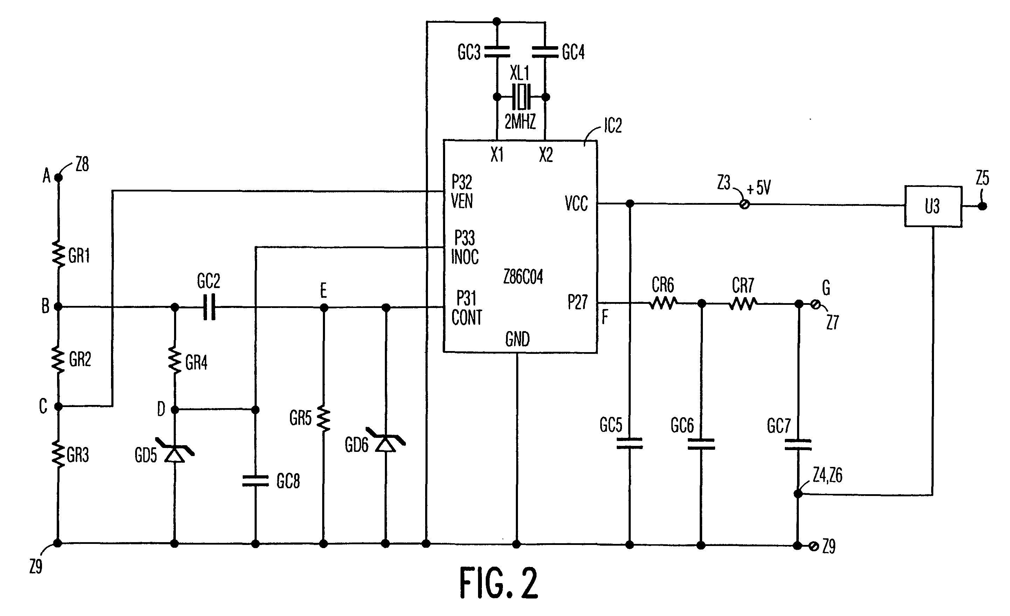

Fig. 2 shows the receiver comprised in the ballast circuit of Fig. 1. This receiver comprises decoding means for decoding control commands present in the input signal according to each of the control techniques mentioned hereabove. The perturbation in the third control technique is a phase cut. The first, second and third control technique are also referred to as phase angle dimming, step dimming and coded dimming respectively. The encoding means that can be used in combination with the ballast circuit shown in Fig. 1 are referred to as a phase angle dimmer, a step dimmer and a coded dimmer respectively.

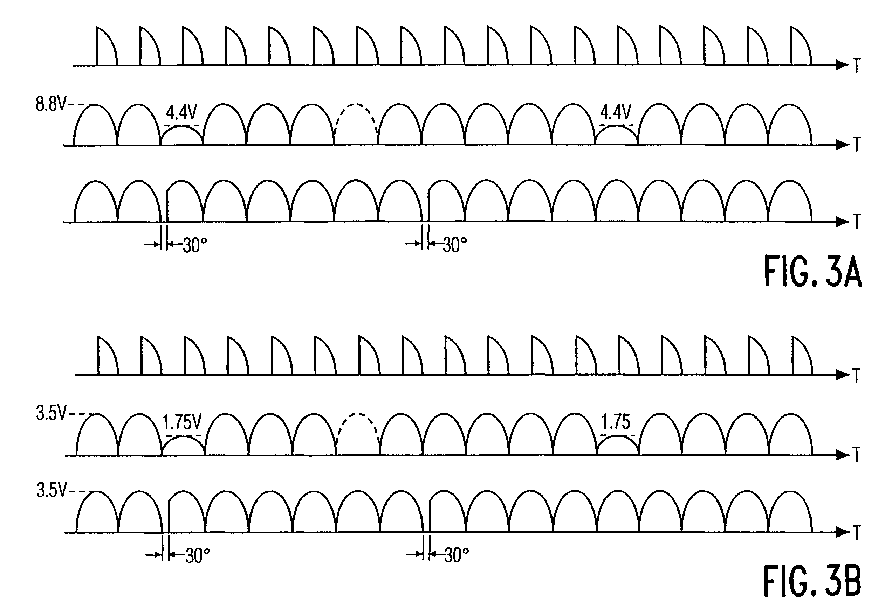

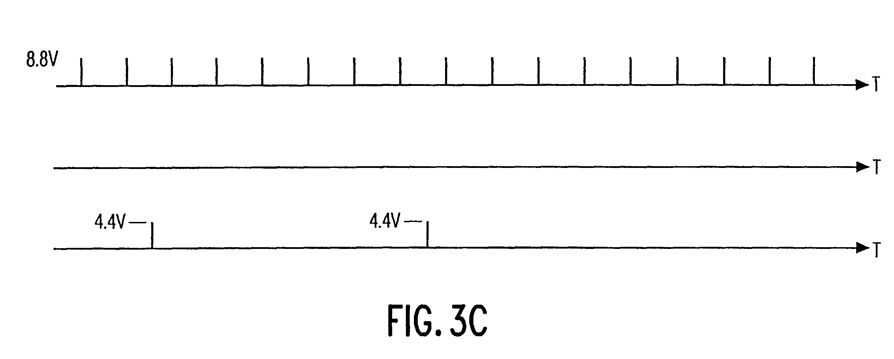

Figures 3(a), 3(b) and 3(c) show different waveforms at several key nodes within the circuit.

The heart of the interface circuit is the microcontroller IC2 (for example, a Z86C04 from Zilog, Inc.) which converts the dimming control signals to a corresponding PWM (Pulse Width Modulation) output. The microcontroller IC2 has three inputs P31, P32 and P33 which accept the coded, step, and phase angle dimming signals, respectively. The PWM output (dim) signal is formed on terminal P27 and is converted to a DC signal for input to the half-bridge driver at the 'dim' input of controller G to adjust the power to the lamp.

Node A (also ref. Z8) of the rectifier circuit B is connected to ground (ref. Z9) via a voltage divider network consisting of the resistors GR1, GR2 and GR3. The input P32 is connected to a node C between the resistors GR2 and GR3. The input P31 is connected to a node B through a differential circuit formed by GC2 and GR5. A zener diode GD6 parallel connects with GR5 to protect the input of the microcontroller IC2. The input terminal P33 is connected to a node D between the resistor GR4 and the diode GD5. The microcontroller is powered at terminal VCC with a 5V voltage source, in this case from voltage regulator U3. An external ceramic resonator XL1 (2MHZ) is connected between the clock terminals X1, X2. The clock terminals are connected to ground via the capacitors GC3 and GC4, respectively, which ensure proper resonator operation. The capacitor GC5 is connected between ground and the voltage supply to suppress noise. The resistors GR6, GR7 and capacitors GC6 and GC7 smooth the PWM output signal from terminal P27 to an average DC signal for input to the dim input of the controller G.

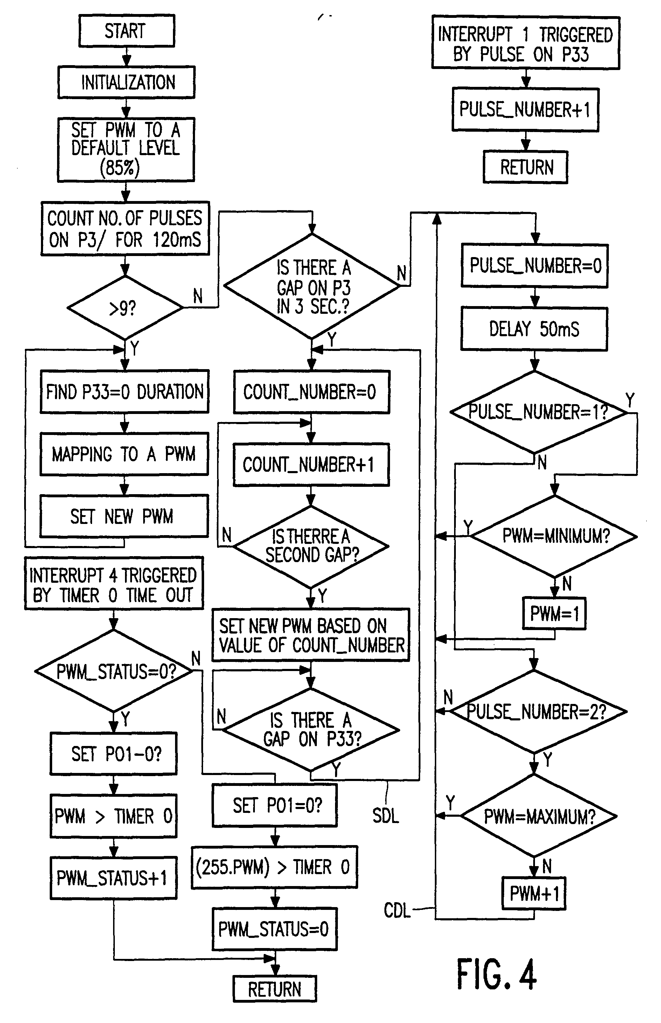

Figure 4 is a software flow chart for the microcontroller IC2. When power turns on, i.e. the mains voltage from the wall controller is provided at ballast input terminals 1',2', the microcontroller IC2 is initialized and the output P27 is set at a default PWM value for a default light level, for example 85% light output. Figure 3(a) shows the waveforms and voltage levels present at node B for each of the three types of wall controllers. The receiver determines which type of external wall controller is installed, i.e. connected to the ballast inputs 1', 2'.

In the present implementation, the controller first determines whether a phase angle dimmer is installed. A phase angle dimmer is distinguished from the step and coded-type dimmers by counting the number of pulses on the terminal P31 for 120ms. Terminal P31 is connected to node E, which is the output of the differentiating circuit formed by the resistor GR5 and the capacitator GC2. The waveform and voltage levels present at node E for each of the three types of dimming controls is shown in Fig. 3(c).

The microcontroller input threshold level is about 2.5V. This means that it is logic "1" if the input is above 2.5V and logic "0" if the input is below 2.5V. A logic "1" will be received on terminal P31 only when the voltage on P31 exceeds 2.5V. The differentiating circuit provides a pulse to terminal P31 of greater than 2.5V (logic "1") whenever the sinusoidal half-cycle includes a phase cut as with a phase angle dimmer or the coded dimmer, but not for a half-cycle of reduced magnitude as with the step dimmer. Since the AC power signal that is used is a 60 Hz sinusoidal supply voltage. The rectified DC output fed to the interface circuit is 120 HZ pulsed DC. During 120 ms, there are at least 13 pulses if a phase angle dimmer is installed and no pulse if a step dimmer is installed. In a preferred embodiment of the coded dimmer the fundamental period is half a period of the rectified sinusoidal AC power signal and a control period consists of six fundamental periods. In each control period 0 (zero), 1 or 2 fundamental periods are perturbed by means of a phase cut. As a result, in case this preferred embodiment of the coded dimmer is installed, at most 6 pulses will be present at P31 within 120 ms. The program routing goes into a loop which only deals with a phase angle dimmer (see loop PAL) if the number of pulses is greater than 9. Thus, control signals from the phase angle dimmer are identified and distinguished from those of the other two types of dimmers by differentiating the input signal and generating a detection signal in the form of a pulse for each occurrence of phase cut, and determining the number of pulses in a selected time period.

If the number of pulses is not greater than 9, then the installed lighting controller could be either a step dimmer or the coded dimmer. One feature of the step dimmer can be used to separate these two. Whenever the step dimmer turns from "off" to any desired light level, the known step dimmer sends out a control signal within a known time period, for example of 2.4 seconds. The control signal can be detected by measuring the logic status on the terminal P32, which is connected to node C. The waveform and voltage levels are shown in Fig. 3(b). In the Fig. 3(b) waveforms, the control signal generated by the coded dimmer will reach logic "1" during every half-cycle, since the peak voltage for each half-cycle is greater than the threshold level of terminal P32. For a step dimmer control signal, this is also true except for the start and stop cycles. During these two cycles, the peak voltage will only reach half of the normal value (about 1.75V, which is lower than the logic "1" level.) This means that there is a pulse gap whenever the start and stop signals are generated. If there is a gap (logic "0") on P32 during the first 3 seconds, the installed dimmer must be of the known step type and the software goes into a step dimming control ("SDL") loop. Otherwise the coded dimmer is installed and the software goes into a continuous dimming control ("CDL") loop. Thus, control signals from a step-type dimmer are identified, and distinguished from those of the coded dimmer, by generating a second detection signals in the form of missing pulses, and determining the number of such second detection signals occurring in a second time period.

If a standard ON/OFF wall switch is installed instead of any dimming control device, the PWM output signal is set to the default level, since the power line is unmodified and the microcontroller U2 will not detect any pulses at its inputs.

The microprocessor IC2 includes an 8-bit register named PWM which controls a substantially square wave-shaped PWM output signal. A timer 0 in the microcontroller determines the duration of tₕ (the time interval during which the output signal is high) and t_{L} (the time interval during which the output signal is low) based on the PWM value in the register. After the timer 0 times out, an interrupt 4 will be generated. In the interrupt subroutine, the first test is the current PWM register output status. If the current PWM register output is logic "0", then it sets the PWM register output to 1 and installs the PWM value into timer 0. If the current PWM register output is logic "1", it sets the PWM register output to logic "0" and installs (255-PWM value) into timer 0. The time to invoke the next interruption is proportional to the value installed into the timer 0. The time of tₕ plus t_{L} is set to be independent of the PWM value so that the PWM signal frequency is a constant. Thus, with a larger PWM value, the PWM register has more time to stay in logic "1" condition and provides a higher average output dimming control voltage. The dimming control voltage range is set from 0.4V to 3V which means the PWM duty cycle should be 8% to 60%, since logic "0" is zero volts and logic "1" is 5 volts.

Controller G controls the pulse width of the signal that renders the switching elements comprised in the half-bridge circuit of inverter E in dependency of the average output dimming voltage present at node Z7.

The phase angle dimming control procedure (the PAL loop) reads the duration of logic "0" on the terminal P33. The logic "0" time is proportional to the phase cut angle from the phase angle dimmer. Larger phase cuts, indicating lower light levels, produce longer logic "0" times. Longer logic "0" times produce a smaller PWM value, to thereby cause a lower DC signal level for the dim input of controller G. Since the relationship between logic "0" duration and the PWM value may not be linear, a look-up table is included in the microprocessor IC2 to convert the logic "0" duration to a desired PWM value. The phase angle dimming control procedure functions for both a triac-type wall controller and an (reverse phase angle) wall controller.

The Step dimming control (SDL) loop always looks for a gap, i.e. a change in logic status from "1" to "0" caused by a missing pulse, on the terminal P32. The PWM value does not change if there is no gap. If a gap is found, a register named "count number" starts to count the number of fully rectified waves on P32 until it finds the second gap. Then, the SDL loop sets a new PWM value corresponding to the number counted in the register "count number".

In the coded dimming control (CDL) loop a pulse on the terminal P31 invokes a subroutine "interrupt 1". The "interrupt 1" procedure increases the value of a register named "pulse number" by 1. The coded dimming control (CDL) loop checks the value in the register "pulse number" every 50 ms and resets the register "pulse number. Since 50 ms equals 3 line cycles, the value of the register "pulse number" will determine if the light level should change. When the value in the register "pulse number" equals zero (0) there is no pulse, so no change in the light level or in the PWM value occurs. When the register "pulse number" equals one (1), the PWM value is decreased by a predetermined amount. This is repeated every time the CDL finds the value of the register "pulse number" equal to one (1) until the PWM value reaches the preset minimum value. When the register "pulse number" equals two (2) the PWM increases by a predetermined amount. This is repeated every time the CDL finds the value of the register "pulse number" equal to two (2) until the PWM value reaches the preset maximum value. Thus, the interface circuitry enables the ballast circuit to automatically accept dimming inputs from each of three different light controllers and produces a DC signal, input to the controller G, to control the light level of the fluorescent lamps. The microcontroller includes a respective decoding loop for each of these control techniques. The microcontroller and associated circuitry first identifies which type of control signals are being received, and then activates the respective decoding loop to decode the signals and output the appropriate DC dim signal via the PWM control.

## Claims

1. A ballast circuit for operating an electric lamp, comprising:
- power inputs for receiving an AC power signal,
- means for generating a lamp current out of said AC power signal,
- means for controlling the operation of the electric lamp in response to a control command, and
- a receiver for receiving an input signal carrying said control command, said input signal having a fundamental period with a nominal voltage waveform, characterized in that said receiver includes decoding means for decoding control commands present in the input signal according to at least two of:
(i) a first control technique wherein commands are indicated by the phase angle of a phase angle cut in the nominal waveform;
(ii) a second control technique wherein commands are indicated by the number of fundamental periods between start and stop points of the command, the stop and start points being fundamental periods having a nominal voltage less than the nominal waveform; and
(iii) a third control technique wherein commands are indicated by an occurrence signature of a pre-selected perturbation in the nominal waveform occurring within a control period of a pre-selected number of fundamental periods.

2. A ballast circuit according to claim 1, wherein said decoding means includes means for decoding commands from each of said three control techniques.

3. A ballast circuit according to claim 1 or 2, wherein said decoding means includes at least two of
- first means for decoding control commands according to said first control technique,
- second means for decoding control commands according to said second control technique,
- third means for decoding control commands according to said third control technique,
and further includes identifying means for identifying the control technique of commands encoded according to said at least two of said first, second and third techniques and for activating the respective one of said at least two means corresponding to the control technique identified by said identifying means.

4. A ballast circuit according to claim 3, wherein said identifying means include means for generating a first detection signal comprising means for differentiating the input signal.

5. A ballast circuit according to claim 4, wherein said identifying means first tests for the presence of control commands according to said first control technique by counting the number of first detection signals generated in a first pre-determined time period.

6. A ballast circuit according to claim 5, wherein in the absence of control commands according to said first control technique, said identifying means then tests for the presence of control commands according to said second technique; if the control commands according to said second technique are identified, said identifying means activates said second means of said decoding means and if control commands according to said second technique are not identified, said identifying means activates said third means of said decoding means.

7. A ballast circuit according to claim 6, wherein said identifying means includes means for generating a second detection signal in response to the presence of a said start and stop point according to said second control technique.

8. A ballast circuit according to claim 7, wherein said identifying means tests for the presence of commands according to said second control technique by counting the number of said second detection signals generated in a second pre-determined time period.

9. A ballast circuit according to one or more of the previous claims, wherein said receiver is coupled to said power inputs for receiving control commands carried by said AC power signal.

10. A ballast circuit according to one or more of the previous claims, wherein said nominal waveform is sinusoidal and said fundamental period is a half-cycle of the full-wave rectified sinusoidal signal.

11. Decoding means suitable for use in a ballast circuit according to one or more of the previous claims.

## Patentansprüche

1. Vorschaltgerät zum Betrieb einer elektrischen Lampe mit
- Leistungseingängen zum Empfang eines Wechselstromleistungssignals;
- Mitteln zur Erzeugung eines Lampenstromes aus dem Wechselstromleistungssignal;
- Mitteln zur Steuerung des Betriebs der elektrischen Lampe in Reaktion auf einen Steuerbefehl; sowie
- einem Empfänger zum Empfang eines Eingangssignals, welches den Steuerbefehl überträgt, wobei das Eingangssignal eine Grundperiode mit einem Nennspannungsverlauf aufweist,
dadurch gekennzeichnet, dass der Empfänger Decodiermittel zum Decodieren von, von dem Eingangssignal übertragenen Steuerbefehlen gemäß zumindest zwei der folgenden Techniken aufweist:
(i) einer ersten Steuertechnik, bei welcher Befehle durch den Phasenwinkel einer Phasenwinkelkürzung in dem Nennspannungsverlauf dargestellt werden:
(ii) einer zweiten Steuertechnik, bei welcher Befehle durch die Anzahl von Grundperioden zwischen Start- und Stopp-Punkten des Befehls angegeben werden, wobei die Stopp- und Start-Punkte Grundperioden darstellen, welche eine niedrigere Nennspannung als der Nennspannungsverlauf aufweisen; sowie
(iii) einer dritten Steuertechnik, bei welcher Befehle durch eine typische Signalfolge einer voreingestellten Störung in dem Nennspannungsverlauf, welche innerhalb einer Steuerperiode einer voreingestellten Anzahl von Grundperioden auftritt, dargestellt sind.

2. Vorschaltgerät nach Anspruch 1, wobei die Decodiermittel Mittel zum Decodieren von Befehlen gemäß jeder der drei Steuertechniken aufweisen.

3. Vorschaltgerät nach Anspruch 1 oder 2, wobei die Decodiermittel zumindest zwei der
- ersten Mittel zum Decodieren von Steuerbefehlen gemäß der ersten Steuertechnik,
- zweiten Mittel zum Decodieren von Steuerbefehlen gemäß der zweiten Steuertechnik,
- dritten Mittel zum Decodieren von Steuerbefehlen gemäß der dritten Steuertechnik
aufweisen und ferner Identifikationsmittel vorsehen, um die Steuertechnik der, entsprechend mindestens zwei der ersten, zweiten und dritten Technik codierten Befehle zu erkennen, und um das jeweilige der mindestens zwei Mittel entsprechend der durch die Identifikationsmittel erkannten Steuertechnik zu aktivieren.

4. Vorschaltgerät nach Anspruch 3, wobei die Identifikationsmittel Mittel zum Erzeugen eines ersten Erkennungssignals aufweisen, welche Mittel zum Differenzieren des Eingangssignals vorsehen.

5. Vorschaltgerät nach Anspruch 4, wobei die Identifikationsmittel durch Zählen der Anzahl der in einem ersten, vorgegebenen Zeitraum erzeugten Erkennungssignale zunächst das Vorliegen von Steuerbefehlen gemäß der ersten Steuertechnik überprüfen.

6. Vorschaltgerät nach Anspruch 5, wobei bei Nichtvorliegen von Steuerbefehlen gemäß der ersten Steuertechnik die Identifikationsmittel sodann das Vorhandensein von Steuerbefehlen gemäß der zweiten Technik überprüfen und bei Erkennen der Steuerbefehle gemäß der zweiten Technik die zweiten Mittel der Decodiermittel aktivieren, während die Identifikationsmittel bei Nichterkennen der Steuerbefehle gemäß der zweiten Technik die dritten Mittel der Decodiermittel aktivieren.

7. Vorschaltgerät nach Anspruch 6, wobei die Identifikationsmittel Mittel zur Erzeugung eines zweiten Erkennungssignals in Reaktion auf das Vorhandensein eines Start- und Stopp-Punktes gemäß der zweiten Steuertechnik aufweisen.

8. Vorschaltgerät nach Anspruch 7, wobei die Identifikationsmittel das Vorliegen von Befehlen gemäß der zweiten Steuertechnik durch Zählen der Anzahl der in einem zweiten, vorgegebenen Zeitraum erzeugten, zweiten Erkennungssignale überprüfen.

9. Vorschaltgerät nach einem der vorangegangenen Ansprüche, wobei der Empfänger an die Leistungseingänge gekoppelt ist, um durch das Wechselstromleistungssignal übertragene Steuerbefehle zu empfangen.

10. Vorschaltgerät nach einem der vorangegangenen Ansprüche, wobei der Nennspannungsverlauf sinusförmig ist und die Grundperiode durch eine Halbperiode des sinusförmigen Zweiwegrichtsignals dargestellt ist.

11. Decodiermittel, welche zur Verwendung in einem Vorschaltgerät nach einem der vorangegangenen Ansprüche geeignet sind.

## Revendications

1. Circuit de ballast pour faire fonctionner une lampe électrique, comprenant :
- des entrées d'alimentation pour recevoir un signal d'alimentation en courant alternatif;
- un moyen pour produire un courant de lampe à partir dudit signal d'alimentation en courant alternatif;
- un moyen pour contrôler le fonctionnement de la lampe électrique en réponse à une commande de contrôle, et
- un récepteur pour recevoir un signal d'entrée acheminant la dite commande de contrôle, ledit signal d'entrée ayant une période fondamentale avec une forme d'onde nominale de la tension,
caractérisé en ce que ledit récepteur comprend des moyens de décodage pour décoder les commandes de contrôle présentes dans le signal d'entrée suivant au moins deux techniques parmi :
(i) une première technique de contrôle dans laquelle les commandes sont indiquées par l'angle de phase d'une coupure d'angle de phase dans la forme d'onde nominale;
(ii) une deuxième technique de contrôle dans laquelle les commandes sont indiquées par le nombre de périodes fondamentales entre les points de marche et d'arrêt de la commande, les points d'arrêt et de marche étant des périodes fondamentales ayant une tension nominale inférieure à la forme d'onde nominale, et
(iii) une troisième technique de contrôle dans laquelle les commandes sont indiquées par une signature d'occurrence d'une perturbation préalablement sélectionnée dans la forme d'onde nominale apparaissant à l'intérieur d'une période de contrôle d'un nombre préalablement sélectionné de périodes fondamentales.

2. Circuit de ballast suivant la revendication 1, dans lequel lesdits moyens de décodage comprennent des moyens pour décoder des commandes de chacune desdites trois techniques de contrôle.

3. Circuit de ballast suivant la revendication 1 ou 2, dans lequel lesdits moyens de décodage comprennent au moins deux parmi :
- des premiers moyens pour décoder des commandes de contrôle suivant ladite première technique de contrôle;
- des deuxièmes moyens pour décoder des commandes de contrôle suivant ladite deuxième technique de contrôle;
- des troisièmes moyens pour décoder des commandes de contrôle suivant ladite troisième technique de contrôle,
et comprend en outre un moyen d'identification pour identifier la technique de contrôle des commandes codées suivant lesdites au moins deux desdites première, deuxième et troisième techniques et pour activer le moyen respectif desdits au moins deux moyens correspondant à la technique de contrôle identifiée par ledit moyen d'identification.

4. Circuit de ballast suivant la revendication 3, dans lequel ledit moyen d'identification comprend des moyens pour produire un premier signal de détection comprenant un moyen pour différentier le signal d'entrée.

5. Circuit de ballast suivant la revendication 4, dans lequel ledit moyen d'identification teste d'abord la présence de commandes de contrôle suivant ladite première technique de contrôle en comptant le nombre de premiers signaux de détection produits dans une première période temporelle prédéterminée.

6. Circuit de ballast suivant la revendication 5, dans lequel en l'absence de commandes de contrôle suivant ladite première technique de contrôle, ledit moyen d'identification teste ensuite la présence de commandes de contrôle suivant ladite deuxième technique; si les commandes de contrôle suivant ladite deuxième technique sont identifiées, ledit moyen d'identification active ledit deuxième moyen desdits moyens de décodage et si les commandes de contrôle suivant ladite deuxième technique ne sont pas identifiées, ledit moyen d'identification active ledit troisième moyen desdits moyens de décodage.

7. Circuit de ballast suivant la revendication 6, dans lequel ledit moyen d'identification comprend des moyens pour produire un deuxième signal de détection en réponse à la présence d'undit point de marche et d'arrêt suivant ladite deuxième technique de contrôle.

8. Circuit de ballast suivant la revendication 7, dans lequel ledit moyen d'identification teste la présence de commandes suivant ladite deuxième technique de contrôle en comptant le nombre desdits deuxièmes signaux de détection produits dans une deuxième période temporelle prédéterminée.

9. Circuit de ballast suivant une ou plusieurs des revendications précédentes, dans lequel ledit récepteur est connecté auxdites entrées d'alimentation pour recevoir les commandes de contrôle acheminées par ledit signal d'alimentation en courant alternatif.

10. Circuit de ballast suivant une ou plusieurs des revendications précédentes, dans lequel ladite forme d'onde nominale est sinusoïdale et ladite période fondamentale est un demi-cycle du signal sinusoïdal redressé sur les deux alternances.

11. Moyens de décodage propres à être utilisés dans un circuit de ballast suivant une ou plusieurs des revendications précédentes.
